# NEUE EUROPÄISCHE PATENTSCHRIFT

(11) **EP 1 261 813 B2**
(45) Veröffentlichungstag und Bekanntmachung des Hinweises auf die Entscheidung über den Einspruch: **10.10.2007**
(45) Hinweis auf die Patenterteilung: 05.10.2005
(21) Anmeldenummer: 01909735.1
(22) Anmeldetag: 10.02.2001
(51) Int. Cl.: F16F 9/084, B60G 15/14

(54) **LUFTFEDER MIT ZWEITEILIGEM GEHÄUSE**
AIR SPRING WITH TWO PART HOUSING
AMORTISSEUR PNEUMATIQUE COMPORTANT UN CARTER EN DEUX PARTIES

(30) Priorität: 01.03.2000 DE 10009912
(43) Veröffentlichungstag der Anmeldung: 04.12.2002
(73) Patentinhaber: Continental Aktiengesellschaft, 30165 Hannover (DE)
(72) Erfinder: OLDENETTEL, Holger, 30900 Resse (DE)
(86) Internationale Anmeldenummer: PCT/EP2001/001477
(87) Internationale Veröffentlichungsnummer: WO 2001/065139

(56) Entgegenhaltungen:
- DE-A- 3 726 923
- FR-A- 2 574 717
- JP-A- 3 244 844
- JP-A- 6 228 538
- JP-A- 60 056 612
- US-A- 5 667 203
- PATENT ABSTRACTS OF JAPAN vol. 009, no. 279 (M-427), 7. November 1985 (1985-11-07) & JP 60 121337 A (BRIDGESTONE KK), 28. Juni 1985 (1985-06-28)

## Beschreibung

Die Erfindung betrifft eine Luftfeder gemäß Anspruch 1.

Luftfedern sind z.B. aus der DE-A-37 26 923 bekannt.

Aus dem Stand der Technik sind ferner Luftfederbeine bekannt (siehe z.B. EP 0 253 261 A1), die aus einem Stoßdämpfer und einer Luftfeder bestehen, die sich auf der Seite des Abrollkolbens auf dem Zylinder des Stoßdämpfers abstützt. Der in den Zylinder einschiebbare Kolben des Stoßdämpfers ist über ein elastisches Lager taumelbeweglich mit dem Gehäuse der Luftfeder verbunden, was eine Schwenkbewegung des Stoßdampfers relativ zu der Luftfeder erlaubt. Oberhalb des Gehäuses der Luftfeder ist ein weiteres elastisches Lager angeordnet, über das das gesamte Luftfederbein mit der Karosserie eines Kraftfahrzeuges verbunden wird. Das weitere Lager ermöglicht eine Schwenkbewegung des gesamten Luftfederbeines in seinem oberen Bereich. Auf Grund der ermöglichten Schwenkbewegungen können Querkräfte und Schubspannungen, die beim Ein- und Ausfedern des Luftfederbeines auf den Rollbalg der Luftfeder wirken, vermindert werden, was zu einer längeren Lebensdauer des Rollbalges führt. Es ist jedoch festzustellen, dass der gesamte Kraftfluss der Radlast durch das oberhalb des Gehäuses der Luftfeder angeordnete elastische Lager geht. Dieses muss entsprechend groß und hart ausgebildet sein, um den durch die Radlast erzeugten Belastungen standzuhalten. Das Lager benötigt daher viel Bauraum, der knapp bemessen ist. Darüber hinaus führt die harte Ausbildung des Lagers zu Komforteinschränkungen des Kraftfahrzeuges, da sowohl die Luftfeder des Federbeines als auch das oberhalb des Gehäuses der Luftfeder angeordnete elastische Lager bei kleinen Schwingungsamplituden des Luftfederbeines eine hohe Federsteifigkeit aufweist. Schwingungen mit kleinen Schwingungsamplituden werden deshalb schlecht abgefedert.

Der Erfindung liegt die Aufgabe zu Grunde, eine Luftfeder zu schaffen, die für den Einbau in ein Luftfederbein geeignet ist und die im oberen Bereich über ein elastisches Lager zur täumelbeweglichen Anbindung der Luftfeder an die Karosserie eines Kraftfahrzeuges verfügt, das wenig Bauraum benötigt.

Die Aufgabe wird durch die kennzeichnenden Merkmale des Anspruchs 1 gelöst.

Der mit der Erfindung erzielte Vorteil ist insbesondere darin zu sehen, dass der Kraftfluss der Radlast direkt von dem Luftvolumen der Luftfeder auf die Karosserie führt und somit das elastische Lager der Luftfeder nicht mehr vollständig durch die Radlast belastet wird. Aus diesem Grunde kann das elastische Lager klein ausgebildet werden und benötigt wenig Bauraum. Ein weiterer Vorteil der Erfindung ist darin zu sehen, dass das elastische Lager auf Grund der geringeren Belastung mit der Radlast weicher ausgebildet werden kann und somit insbesondere Schwingungen mit einer kleinen Amplitude und einer hohen Schwingungsfrequenz von dem Lager abgefedert werden können. Somit verbessert sich das Federungsverhalten der Luftfeder bei den genannten Schwingungen. Ein weiterer Vorteil der Erfindung ist darin zu sehen, dass durch das elastische Lager zwischen dem ersten Teil und dem zweiten Teil des Gehäuses der Luftfeder gewährleistet ist, dass der Stoßdämpfer im oberen Bereich der Luftfeder taumelbeweglich zum Gehäuse der Luftfeder ist. Auf ein elastisches Lager im Bereich der Befestigung des einschiebbaren Kolbens am zweiten Teil des Gehäuses kann daher verzichtet werden.

Gemäß einer Weiterbildung der Erfindung nach Anspruch 2 weist das elastische Lager in etwa die Form eines ringförmigen Ausschnittes einer Kugelfläche auf und ist zwischen zwei flanschartigen Kragen des ersten und zweiten Teiles des Gehäuses angeordnet. Der Schwenkpunkt der Luftfeder in ihrem oberem Bereich ist dann durch den Mittelpunkt der ausgehend von dem ringförmigen Lager vervollständigten Kugelfläche gegeben. Der Vorteil der Weiterbildung ist darin zu sehen, dass durch die vorgeschlagene Formgebung des elastischen Lagers der Schwenkpunkt der Luftfeder im oberen Bereich genau festgelegt werden kann.

Gemäß einer Weiterbildung der Erfindung nach Anspruch 3 ist das elastische Lager in Form eines ringförmigen Ausschnitts einer Kugelfläche derart zwischen den beiden Teilen des Gehäuses angeordnet, dass der Mittelpunkt der ausgehend von dem ringförmigen Lager vervollständigten Kugelfläche, und damit der Schwenkpunkt des Luftfederbeines, in dem Bereich liegt, in dem der Kolben des Stoßdämpfers mit der Karosserie verbunden ist. Der Vorteil dieser Weiterbildung ist darin zu sehen, dass das Federbein verspannungsfrei um diesen Punkt schwenken kann.

Gemäß einer Weiterbildung der Erfindung nach Anspruch 4 besteht das elastische Lager aus einem Elastomerbauteil. Der Vorteil dieser Weiterbildung ist darin zu sehen, dass elastische Lager in Form eines Elastomerbauteiles besonders einfach ausgebildet werden können. Darüber hinaus ist ein elastisches Lager in Form eines Elastomerbauteiles besonders gut dazu geeignet, die beiden Teile des Gehäuses luftdicht aufeinander zu legen.

Ausführungsbeispiele und weitere Vorteile der Erfindung werden im Zusammenhang mit den nachstehenden Figuren erläutert, darin zeigt:

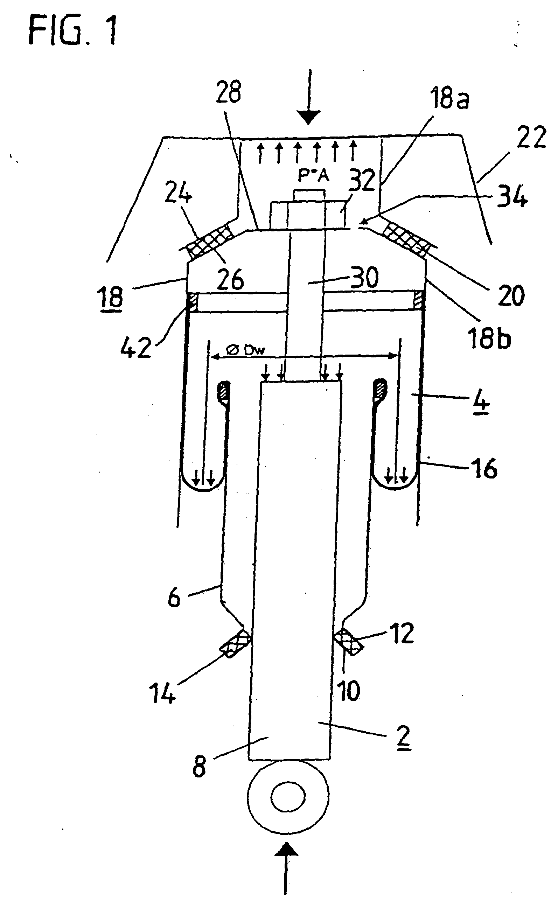

- Figur 1: ein Luftfederbein.

Figur 1 zeigt ein Luftfederbein mit einem Stoßdämpfer 2 und einer Luftfeder 4. Der Abrollkolben 6 der Luftfeder stützt sich auf dem Zylinder 8 des Stoßdämpfers 2 taumelbeweglich ab. Dazu weist der Zylinder 8 des Stoßdämpfers 2 einen flanschartigen Kragen 10 und der Abrollkolben 6 der Luftfeder 2 einen flanschartigen Kragen 12 auf, zwischen denen ein elastisches Lager 14 angeordnet ist. An dem oberen Ende des Abrollkolbens 6 ist der Rollbalg 16 der Luftfeder befestigt, der unter Ausbildung einer Abrollfalte auf dem Abrollkolben 6 abrollen kann. Auf der dem Abrollkolben 6 gegenüber liegenden Seite ist der Rollbalg 16 an einem Gehäuse 18 befestigt. Der Rollbalg 16 umschließt ein Luftvolumen, das gegenüber der Atmosphäre luftdicht abgeschlossen ist.

Das Gehäuse 18 besteht aus zwei Teilen 18a und 18b, von denen der erste Teil 18a der Verbindung der Luftfeder 4 und damit des Luftfederbeines mit der Karosserie 22 eines Kraftfahrzeuges dient. Die Verbindung kann beispielsweise mittels (nicht dargestellter) Schrauben erfolgen. Der zweite Teil 18b des Gehäuses 18 dient der Befestigung des Rollbalges 16 der Luftfeder 4 und ist vorzugsweise gleichzeitig als Außenführung für den Rollbalg 16 der Luftfeder 4 ausgebildet, so wie es auch in der Figur 1 (und den anderen Figuren) dargestellt ist. Die Befestigung des Rollbalges 16 an dem zweiten Teil 18 erfolgt vorzugsweise mittels eines Spanriringes 42. Zwischen dem ersten Teil 18a und dem zweiten Teil 18b des Gehäuses 18 ist ein ringförmig ausgebildetes elastisches Lager in Form eines Elastomerbauteiles 20 angeordnet. Vorzugsweise weist das Elastomerbauteil 20 in etwa die Form eines ringförmigen Ausschnittes einer Kugelfläche auf, so wie es auch in der Figur 1 dargestellt ist. Das Elastomerbauteil 20 liegt passgenau zwischen flanschartigen Abschnitten 24 und 26 der Gehäuseteile 18a und 18b, so dass diese luftdicht aufeinander liegen.

Die dem Luftvolumen der Luftfeder zugewandte Oberfläche des oberen Teiles 18a des Gehäuses 18 ist mit dem Luftdruck des Luftvolumens der Luftfeder 4 beaufschlagt Die in Längsrichtung des Luftfederbeines druckwirksame Oberfläche des oberen Teiles 18a entspricht in ihrer Größe vorzugsweise in etwa der druckwirksamen Fläche der Luftfeder 4 (der Durchmesser der druckwirksamen Fläche der Luftfeder 2 ist in der Fig. 1 mit D_{W} gekennzeichnet; die äußere Begrenzungslinie der druckwirksamen Fläche liegt an der Stelle, an der die Tangenten am Rollbalg 16 der Luftfeder senkrecht zur Federkraft bzw. Tragkraft verlaufen). Dadurch ist gewährleistet, dass die gesamte Radlastkraft (angedeutet durch den Pfeil oberhalb der Karosserie 22) durch die Kraft kompensiert wird, die der Luftdruck in dem Luftvolumen der Luftfeder 4 auf die in Längsrichtung des Luftfederbeines ausgerichtete druckwirksame Fläche des Gehäuses 18a ausübt. Auf das Elastomerbauteil 20 wirkt die Radlast dann nicht.

Darüber hinaus entspricht der lichte Durchmesser des Eiastomerbauteiles 20 in etwa dem Druchmesser der druckwirksamen Querschnittsfläche der Luftfeder 4, so dass weder Zug- noch Druckkräfte auf das Elastomerbauteil 20 wirken.

Der Gehäuseteil 18b des Gehäuses 18 enthält einen Deckel 28, an dem der in den Zylinder 8 des Stoßdämpfers 2 einschiebbare Kolben 30 mit einer Schraube 32 befestigt ist. Die Luftfeder 4 und der Stoßdämpfer 2 sind über das Elastomerbauteil 20 taumelbeweglich relativ zur Karosserie. 22 gelagert. In dem Deckel 28 des Gehäuseteiles 18b befinden sich Öffnungen 34, die einen Druckausgleich des Luftdruckes auf beiden Seiten des Deckels 28 ermöglichen. Dadurch ist gewährleistet, dass die in Längsrichtung des Luftfederbeines druckwirksame Oberfläche des Gehäuseteiles 18a immer mit dem Luftdruck in der Luftfeder 2 beaufschlagt ist und diese Fläche somit zumindest ein Teil der Radlast tragen kann.

### Bezugszeichenliste

- 2: Stoßdämpfer
- 4: Luftfeder
- 6: Abrollkolben
- 8: Zylinder
- 10, 12: flanschartiger Kragen
- 14: elastisches Lager
- 16: Rollbalg
- 18: Gehäuse
- 18a, 18b: Teil des Gehäuses 18
- 20: Elastomerbauteil
- 22: Karosserie
- 24, 26: flanschartige Abschnitte
- 28: Deckel
- 30: Kolben
- 32: Schraube
- 34: Öffnungen
- 36, 38: Elastomerbauteil
- 40: Mittelpunkt
- 42, 44: Spannring

## Patentansprüche

1. Luftfeder (4), die
- einen Rollbalg (16) aufweist, der einerseits an einem Gehäuse (18) und andererseits an einem Abrollkolben (6) befestigt ist und ein Luftvolumen umschließt, wobei die dem Luftvolumen der Luftfeder (4) zugewandte Oberfläche des Gehäuses (18) mit dem Luftdruck des Luftvolumens beaufschlagt ist, und die
- gehäuseseitig unter Zwischenschaltung eines elastischen Lagers (20) mit der Karosserie (22) eines Kraftfahrzeuges verbindbar ist, wobei
- das Gehäuse (18) aus mindestens zwei Teilen (18a, 18b) besteht, von denen
- ein erster Teil (18a), dessen dem Luftvolumen der Luftfeder (4) zugewandte Oberfläche mit dem Luftdruck des Luftvolumens der Luftfeder (4) beaufschlagt ist, der Verbindung der Luftfeder (4) mit der Karosserie (22) eines Kraftfahrzeuges dient
- und ein zweiter Teil (18b) der Befestigung des Rollbalges (16) dient und
- das elastische Lager (20) ringförmig ausgebildet und zwischen beiden Teilen (18a, 18b) des Gehäuses (18) angeordnet ist, wobei
sich der Abrollkolben (6) auf einen Zylinder (8) eines Stoßdämpfers (2) abstützt, dessen in den Zylinder (8) einschiebbarer Kolben (30) mit dem zweiten Teil (18b) des Gehäuses (18) verbunden ist.

2. Luftfeder (4) nach Ansprüch 1, **dadurch gekennzeichnet, dass** das elastische Lager (20) in etwa die Form eines ringförmigen Ausschnittes einer Kugelfläche aufweist und zwischen flanschartigen Abschnitten (24,26) des ersten und zweiten Teils (18a,18b) des Gehäuses (18) angeordnet ist.

3. Luftfeder (4) nach Ansprüch 2, **dadurch gekennzeichnet, dass** das elastische Lager (20) in Form des ringförmigen Ausschnitts derart zwischen den beiden Teilen (18a,18b) des Gehäuses (18) angeordnet ist, dass der Mittelpunkt der ausgehend vom ringförmigen Ausschnitt vervollständigten Kugelfläche in dem Bereich liegt, in dem der Kolben (30) des Stoßdämpfers (2) mit der Karosserie (22) verbunden ist.

4. Luftfeder (4) nach einem der Ansprüche 1 bis 3, **dadurch gekennzeichnet, dass** das elastische Lager (20) aus einem Elastomerbauteil besteht.

## Claims

1. Air spring (4) which
- has a rolling bellows (16) which is fastened at one end to a housing (18) and at the other end to a rolling piston (6) and encloses an air volume, that surface of the housing (18) which faces the air volume of the air spring (4) being acted on by the air pressure of the air volume, and which
- can be connected on the housing side to the body (22) of a motor vehicle, with an elastic bearing (20) being arranged in between,
- the housing (18) comprising at least two parts (18a, 18b), of which
- a first part (18a), the surface of which which faces the air volume of the air spring (4) is loaded with the air pressure of the air volume of the air spring (4), serves for connecting the air spring (4) to the body (22) of a motor vehicle
- and a second part (18b) serves for fastening the rolling bellows (16), and
- the elastic bearing (20) being of annular configuration and being arranged between the two parts (18a, 18b) of the housing (18), the rolling piston (6) being supported on a cylinder (8) of a shock absorber (2), the piston (30) of the latter, which can be pushed into the cylinder (8), being connected to the second part (18b) of the housing (18).

2. Air spring (4) according to Claim 1, **characterized in that** the elastic bearing (20) has approximately the shape of an annular section of a spherical surface and is arranged between flange-like sections (24, 26) of the first and second parts (18a, 18b) of the housing (18).

3. Air spring (4) according to Claim 2, **characterized in that** the elastic bearing (20) in the shape of the annular section is arranged between the two parts (18a, 18b) of the housing (18) in such a way that the centre point of the spherical surface, starting from the annular section, lies in the region in which the piston (30) of the shock absorber (2) is connected to the body (22).

4. Air spring (4) according to one of Claims 1 to 3, **characterized in that** the elastic layer (20) is composed of an elastomer component.

## Revendications

1. Amortisseur pneumatique (4) qui présente
- un soufflet déroulant (16) qui est fixé d'une part sur un boîtier (18) et d'autre part sur un piston d'amortissement (6) et qui enferme un volume d'air, la surface du boîtier (18) tournée vers le volume d'air de l'amortisseur pneumatique (4) étant sollicité par la pression d'air du volume d'air, et dont
- le boîtier peut être relié à la carrosserie (22) d'un véhicule automobile en intercalant un support élastique (20), ce qui
- le boîtier (18) étant constitué d'au moins deux parties (18a, 18b) dont
- une première partie (18a) dont la surface tournée vers le volume d'air de l'amortisseur pneumatique (4) est sollicitée par la pression d'air du volume d'air de l'amortisseur pneumatique (4) sert à relier l'amortisseur pneumatique (4) à la carrosserie (22) d'un véhicule automobile
- et la deuxième partie (18b) sert à fixer le soufflet déroulant (16), et
- le support élastique (20) présente une configuration annulaire et est disposé entre les deux parties (18a, 18b) du boîtier (18),
le piston d'amortisseur (6) s'appuyant sur un cylindre (8) d'un amortisseur (2) dont le piston (30) qui peut s'enfoncer dans le cylindre (8) est relié à la deuxième partie (18b) du boîtier (18).

2. Amortisseur pneumatique (4) selon la revendication 1, **caractérisé en ce que** le support élastique (20) présente sensiblement la forme d'une partie annulaire d'une surface sphérique et est disposé entre des tronçons en forme de bride (24, 26) de la première et de la deuxième partie (18a, 18b) du boîtier (18).

3. Amortisseur pneumatique (4) selon la revendication 2, **caractérisé en ce que** le support élastique (20) en forme de tronçon annulaire est disposé entre les deux pièces (18a, 18b) du boîtier (18) de telle sorte que le centre de la surface sphérique qui complète le tronçon annulaire est situé dans la zone dans laquelle le piston (30) de l'amortisseur (2) est relié à la carrosserie (22).

4. Amortisseur pneumatique (4) selon l'une des revendications 1 à 3, **caractérisé en ce que** le support élastique (20) est constitué d'un composant élastomère.
